# EUROPÄISCHE PATENTANMELDUNG

(11) **EP 2 532 935 A1**
(43) Veröffentlichungstag der Anmeldung: **12.12.2012**
(21) Anmeldenummer: 12169257.8
(22) Anmeldetag: 24.05.2012
(51) Int. Cl.: F16L 11/127, H05B 6/52

(54) **Schlauch mit dielektrischer Heizung**

(30) Priorität: 06.06.2011 DE 102011050855
(71) Anmelder: ContiTech Schlauch GmbH, 30165 Hannover (DE)
(72) Erfinder: Reck, Siegfried, 31582 Nienburg (DE)

(57) **Zusammenfassung**

Die vorliegende Erfindung betrifft einen Schlauch mit einer Schlauchwand (2) und einer ersten und einer zweiten elektrisch leitfähigen Struktur (4a, 4b), zwischen denen eine elektrische Wechselspannung angelegt werden kann. Die erste und zweite elektrisch leitfähige Struktur (4a, 4b) sind im Wesentlichen in axialer Richtung des Schlauches verlaufend derart vorgesehen, dass sich zwischen der ersten und zweiten elektrisch leitfähigen Struktur (4a, 4b) ein im Wesentlichen radial zur Schlauchwand (2) verlaufendes elektrisches Wechselfeld ausbilden kann, welches ein innerhalb der Schlauchwand (2) befindliches Fluid (10) zumindest teilweise durchdringt.

## Beschreibung

Die vorliegende Erfindung betrifft einen Schlauch gemäß dem Oberbegriff des Anspruchs 1, nämlich mit einer Schlauchwand und einer ersten und einer zweiten elektrisch leitfähigen Struktur, zwischen denen eine elektrische Wechselspannung angelegt werden kann. Mittels eines derartigen Schlauches oder auch sonstiger flexibler Leitung kann ein Fluid oder Medium, welches sich im Schlauch befindet oder durch diesen strömen kann, dielektrisch erwärmt werden.

Die Erwärmung eines Fluids ist beispielsweise bei der Behandlung von Abgasen von Verbrennungsmotoren erforderlich. So werden die Abgase von Dieselmotoren in Nutzfahrzeugen in einem SCR-Katalysator (selectiv catalytic reaction) mit Hilfe einer wässerigen Harnstofflösung nachbehandelt, um die Stickoxide im Abgasstrom zu vermindern. Das Fahrzeug weist einen Vorratsbehälter mit der Harnstofflösung auf, die durch einen Schlauch in den Katalysator gefördert wird. Da die Harnstofflösung bei einer Temperatur von ca. minus 10°C gefrieren kann, können derartige Schläuche bei niedrigen Außentemperaturen beheizt werden, damit die Harnstofflösung im Schlauch flüssig bleibt.

Es ist bekannt, dass zu diesem Zweck in der Wandung des Schlauchs elektrisch leitfähige Strukturen integriert sein können, die als Heizwiderstände dienen. Eine derartige Anordnung beschreibt beispielsweise die DE 102 01 920 A1, die einen flexiblen mehrschichtigen beheizbaren Schlauch betrifft, zwischen dessen Verstärkungsschicht und elastomerer Außenschicht elektrische Heizleiter, d.h. elektrische Widerstandsdrähte, vorgesehen sind. Diese Widerstandsdrähte können durch eine Spannungsquelle gespeist werden, so dass sie sich erwärmen und ihre Wärme an das sie umgebende Schlauchmaterial und damit auch mittelbar an das Fluid im Schlauch abgeben.

Bei dieser Art der Erwärmung des Fluids erwärmen die elektrischen Heizleiter das sie umgebende Schlauchmaterial insgesamt. Nachteilig ist dabei zum einen, dass nur ein Teil der Heizleistung in das Innere des Schlauches und damit auf das Fluid übertragen wird. Ein Teil der Heizleistung wird jedoch nach Außen übertragen und ungenutzt an die Umgebung abgegeben, d.h. dieser Teil der Heizleistung stellt einen Verlust dar. Vielmehr kann hierdurch eine ungewollte Erwärmung weiterer Fahrzeugkomponenten erfolgen, die mit dem beheizbaren Schlauch in Kontakt kommen bzw. von ihm Wärme aufnehmen können.

Nachteilig ist auch, dass die Erwärmung des Fluids zeitverzögert erfolgt, d.h. dass es eine gewisse Zeit dauert, bis sich die Wärme von den elektrischen Heizleitern durch das Material des Schlauches bis zum Fluid ausgebreitet hat. Diese Zeitverzögerung wird dadurch erhöht, dass die elastomeren Wände des Schlauchs die Wärme schlecht leiten. Ferner muss die Temperatur der Heizwiderstände relativ hoch gewählt werden, um die erforderliche Wärme durch den hohen Wärmewiderstand der elastomeren Wände auf das Fluid übertragen zu können. Hierdurch werden jedoch auch die Wärmeverluste nach Außen erhöht. Ferner kann durch eine thermische Belastung die Lebensdauer von elastomeren Produkten heruntergesetzt werden.

Schließlich muss bei dieser Art der Erwärmung des Fluids der spezifische Widerstand der elektrischen Heizleiter an die Länge des zu beheizenden Schlauches angepasst werden, um den Leistungsbelag (Leistung pro Meter Länge) einzustellen. Dadurch erhöhen sich nachteilig die Vielfalt der Artikel und der Aufwand, sie zu verwalten. Dies gilt ebenso für die Vormaterialien, aus denen die Schläuche hergestellt werden. Insgesamt wirkt sich die Vielfalt möglicher Schlauchlängen negativ auf die Logistik des Herstellungsprozesses aus.

Die EP 0 586 469 B1 betrifft ein Verfahren und eine Vorrichtung zum Heizen eines Mediums mittels eines hochfrequenten elektrischen Stroms, wobei das Medium durch ein Rohr aus einem elektrisch nicht leitenden Material geführt wird. Es sind zwei ringförmige Elektroden um das Rohr herum axial beabstandet angeordnet und mit einem HF-Generator verbunden, dessen hochfrequente Spannung an die Elektroden angelegt werden kann. Das hierdurch erzeugte elektrische Wechselfeld durchdringt das Rohr und damit auch das im Inneren des Rohrs befindliche oder strömende Fluid im Bereich zwischen den Elektroden im Wesentlichen in der axialen Richtung des Rohres. Hierdurch wird das Fluid in diesem Bereich durch Heizen mittels dielektrischer Verluste erwärmt.

Nachteilig ist bei dem Verfahren bzw. der Vorrichtung der EP 0 586 469 B1, dass lediglich ein Teilbereich des Rohres, nämlich der Bereich zwischen den Elektroden, von dem elektrischen Wechselfeld durchströmt und damit lediglich Fluid in diesem Bereich erwärmt wird. Eine Erwärmung des Fluids außerhalb dieses Bereichs kann lediglich durch Wärmeleitung innerhalb des Fluids oder über die Rohrwand sowie durch Vermischung eines strömenden Fluids, hier allerdings lediglich in Strömungsrichtung, erfolgen. Somit beschreibt das Verfahren und die Vorrichtung der EP 0 586 469 B1 eine dielektrische Erwärmung eines Fluids lediglich in einem Teilbereich eines Rohres.

Ferner ist bei dem Verfahren bzw. der Vorrichtung der EP 0 586 469 B1 eine gleichmäßige Durchdringung des Fluids durch das elektrische Wechselfeld und damit eine vollständige Erwärmung des Fluids in diesem Bereich lediglich bei einem geraden Verlauf des Rohres in diesem Bereich gegeben - ist der Bereich zwischen den Elektroden jedoch ungerade, beispielsweise gebogen oder gekrümmt, ausgebildet, so bildet sich das elektrische Wechselfeld auf dem kürzesten Wege zwischen den Elektroden durch das Fluid aus und das Fluid wird ungleichmäßig, vielleicht in einigen Bereichen sogar gar nicht durchdrungen und erwärmt. Somit ist das Verfahren und die Vorrichtung der EP 0 586 469 B1 lediglich für gerade verlaufende Bereiche von Rohren geeignet.

Die US 3,641,302 beschreibt eine Vorrichtung zur Erwärmung von Fluiden durch hochfrequente Energie. Die Vorrichtung weist eine äußere Ummantelung, eine innere in axialer Richtung vorgesehene zentrale Elektrode und einen nicht elektrisch leitenden Zylinder auf, der die innere Elektrode von der äußeren Ummantelung in radialer Richtung trennt und hierdurch zwei konzentrische zylindrische Bereich ausbildet. Durch diese Bereiche strömt ein zu erwärmendes Fluid in axialer Richtung hindurch und wird dort ein erstes Mal in dem Bereich zwischen zentraler Elektrode und Zylinder und ein weiteres Mal in dem Bereich zwischen Zylinder und äußerer Ummantelung dielektrisch erwärmt. Nachteilig ist auch bei dieser Vorrichtung, dass eine Erwärmung lediglich innerhalb dieser Vorrichtung in dem Bereich erfolgt, in dem die innere Elektrode gegenüber der äußeren Ummantelung vorgesehen ist - in den Bereichen vor bzw. hinter der Vorrichtung der US 3,641,302 in Strömungsrichtung des Fluids erfolgt keine dielektrischer Erwärmung sondern höchstens Wärmeleitung sowie eine Durchmischung des Fluids.

Auch erfolgt lediglich dann eine gleichmäßige dielektrische Erwärmung in alle Richtungen der inneren Elektrode, falls die innere Elektrode gegenüber der äußeren Ummantelung über ihre gesamte axiale Länge radial gleichmäßig beabstandet ist; werden die innere Elektrode und die äußere Ummantelung gegeneinander radial versetzt oder quer zur axialen Richtung geneigt, gekippt oder gebogen, so bilden sich zwischen innerer Elektrode und äußerer Ummantelung aufgrund der ungleichmäßigen radialen Abstände unterschiedlich starke elektrische Felder aus, die entsprechend zu einer unterschiedlich starken dielektrischen Erwärmung des Fluids führen.

Der vorliegenden Erfindung liegt die Aufgabe zugrunde, die zuvor beschriebenen Nachteile zu überwinden. Somit soll ein Schlauch als flexible Fluidleitung zur Verfügung gestellt werden, der das im Schlauch geführte Fluid direkt und zeitnah erwärmen kann, um so Energieverluste und zeitliche Verzögerungen zu vermeiden, und der flexibel und kostengünstig hergestellt und gelagert werden kann.

Erfindungsgemäß wird die Aufgabe durch einen Schlauch der zuvor beschriebenen Art durch die Merkmale des kennzeichnenden Teils des Anspruchs 1 gelöst. Vorteilhafte Weiterbildungen sind in den Unteransprüchen beschrieben.

Somit betrifft die vorliegende Erfindung gemäß Anspruch 1 einen Schlauch mit einer Schlauchwand und einer ersten und einer zweiten elektrisch leitfähigen Struktur, zwischen denen eine elektrische Wechselspannung angelegt werden kann. Die erste und zweite elektrisch leitfähige Struktur sind im Wesentlichen in axialer Richtung des Schlauches verlaufend derart vorgesehen, dass sich zwischen der ersten und zweiten elektrisch leitfähigen Struktur ein im Wesentlichen radial zur Schlauchwand verlaufendes elektrisches Wechselfeld ausbilden kann, welches ein innerhalb der Schlauchwand befindliches Fluid zumindest teilweise durchdringt.

Der vorliegenden Erfindung liegt die Erkenntnis zugrunde, die dielektrischen Eigenschaften eines Fluids zu nutzen, um es mit Hilfe eines hochfrequenten elektrischen Wechselfeldes direkt zu erwärmen. Zu diesem Zweck weist der erfindungsgemäße Schlauch wenigstens zwei hochleitfähige Strukturen auf, die zwei getrennte Äquipotentialflächen eines Kondensators bilden. Werden die beiden Äquipotentialflächen mittels eines Hochfrequenzgenerators durch eine elektrische Wechselspannung angeregt, so entsteht zwischen ihnen ein eklektisches Wechselfeld, das das zu erwärmende Fluid zumindest teilweise durchsetzt. Die in dem Fluid enthaltenen oder durch Influenz erzeugten elektrischen Dipole werden von dem elektrischen Wechselfeld hochfrequent umelektrisiert. Dadurch steigt die innere Energie des Fluids und damit seine Temperatur.

Aufgrund des Dipolcharakters des Wassermoleküls haben Wasser und wässerige Lösungen wie beispielsweise die wässerigen Harnstofflösungen eines SCR-Katalysators eine besonders hohe Dielektrizitätszahl (εᵣ >>1), so dass sie sich besonders gut dielektrisch erwärmen lassen. Bei leitfähigen Flüssigkeiten tritt zusätzlich die frequenzunabhängige konduktive Erwärmung auf.

Der erfindungsgemäße Schlauch erwärmt somit das Fluid direkt auf molekularer Ebene, wodurch der Umweg über die Erwärmung des Materials des Schlauches vermieden wird, der sowohl Wärmeverluste nach Außen als auch einen zeitlichen Verzug der Erwärmung des Fluids im Inneren des Schlauches zur Folge hat. Dies bedeutet, dass erfindungsgemäß lediglich dort die Wärme eingebracht wird, wo sie auch benötigt wird, nämlich in der wässerigen Harnstofflösung selbst.

Die Ausbildung des elektrischen Wechselfeldes, welches die dielektrische Erwärmung hervorruft, erfolgt im Wesentlichen in radialer Richtung, welche bei einem Schlauch deutlich kürzer ausgebildet ist als die axiale Richtung. Somit wird erfindungsgemäß das elektrische Wechselfeld auf dem "kürzesten" Wege ausgebildet, der zur dielektrischen Erwärmung verwendet werden kann, nämlich innerhalb der Ebene des Querschnitts durch den Schlauch in radialer Richtung. Ist der Radius über die Länge des Schlauches gleichbleibend, ist bei entsprechendem Verlauf der elektrisch leitfähigen Strukturen auch die dielektrische Erwärmung über ihre Länge gleichbleibend.

Desweiteren ist das Maß der dielektrischen Erwärmung proportional zur elektrischen Feldstärke des elektrischen Wechselfeldes und umgekehrt proportional zum Abstand der Äquipotentialflächen. Somit ist ein möglichst geringer Abstand zwischen den Äquipotentialflächen vorteilhaft, um schon bei einer elektrischen Wechselspannung mit geringer Amplitude eine möglichst große elektrische Feldstärke des Wechselfeldes und damit eine hohe dielektrische Erwärmung zu erreichen. Die geringe Amplitude der elektrischen Wechselspannung führt auch zu einem geringen elektrischen Energieverbrauch des erfindungsgemäßen Schlauches zur dielektrischen Erwärmung des Fluids.

Ferner ist es vorteilhaft, die erfindungsgemäße Anwendung der dielektrischen Erwärmung bei einem Schlauch, d.h. bei einer flexiblen Fluidleitung, vorzusehen, da ein Schlauch gebogen oder gekrümmt eingesetzt und während seines Einsatzes auch z.B. durch Schwingungen bewegt werden kann. Da sich erfindungsgemäß das dielektrische Wechselfeld zwischen den elektrisch leitfähigen Strukturen im Wesentlichen radial ausbildet, wird die dielektrische Erwärmung des Fluids durch eine Biegung oder Krümmung oder Vibrationen des Schlauches zumindest nicht wesentlich beeinflusst, so dass die erfindungsgemäße Anwendung der dielektrischen Erwärmung gerade zur Umsetzung bei einem Schlauch, d.h. bei einer flexiblen Fluidleitung, geeignet ist.

Der Schlauch bzw. die Schlauchwand können beliebig geformt ausgestaltet sein, solange sich die elektrisch leitfähigen Strukturen derart in, an oder auf der Schlauchwand bzw. zwischen den Schichten des Schlauches vorsehen lassen, dass sich zwischen den elektrisch leitfähigen Strukturen das elektrische Wechselfeld im Wesentlichen radial zur Schlauchwand verlaufend ausbilden kann und das innerhalb der Schlauchwand befindliche Fluid zumindest teilweise durchdringt. Beispielsweise kann der Schlauch bzw. die Schlauchwand abschnittsweise oder durchgängig zylindrisch, rechteckig, dreieckig, quadratisch, sternförmig oder auch mit einer Vielzahl von Ecken ausgebildet sein. Vorzugsweise ist der Schlauch bzw. die Schlauchwand zylindrisch ausgebildet. Hierdurch kann ein möglichst geringer Strömungswiderstand gegenüber anderen Querschnitten erreicht werden.

Das hochfrequente Wechselfeld kann grundsätzlich beliebig gewählt werden. Jedoch ist es vorteilhaft, ein elektrisches Wechselfeld aus dem Bereich der ISM-Frequenz-Bänder (Industrial, Scientific and Medical Band) beispielsweise mit einer Frequenz von ca. 13,56 MHz oder ca. 27 MHz zu verwenden, da diese Frequenzbereich für derartige Anwendungen vorgesehen, d.h. reserviert, sind.

Die Schlauchwand kann aus den üblichen Materialien vorgesehen werden, die für Schläuche im Allgemeinen und für das zu fördernde Fluid geeignet sind. Vorzugsweise ist die Schlauchwand jedoch aus einem Material vorzusehen, das gar nicht bis schwach elektrisch leitend ist, damit die elektrische Wechselspannung nicht durch die Schlauchwand abgeführt wird sondern die den elektrisch leitfähigen Strukturen zugeführte elektrische Energie möglichst vollständig zur Erzeugung des elektrischen Wechselfelds genutzt werden kann. Daher ist die Schlauchwand aus einem Material vorzusehen, welches keine bzw. kaum dielektrische Verluste aufweist (z.B. εᵣ ≤ 3). Beispielsweise kann die Schlauchwand aus Gummi vorgesehen werden, welches eine Dielektrizitätszahl εᵣ von 2 bis 3 besitzt.

Die elektrisch leitfähigen Strukturen können in axialer Richtung des Schlauches über dessen gesamte Länge oder auch lediglich abschnittsweise ausgebildet sein. Dabei können auch mehrere Abschnitte eines Schlauches in axialer Richtung mit mehreren elektrisch leitfähigen Strukturen versehen sein. Unter einer elektrisch leitfähigen Struktur werden dabei jegliche Anordnungen verstanden, die geeignet sind, elektrische Energie zu leiten und als Äquipotentialflächen eines Kondensators zu wirken, so dass zwischen zwei dieser elektrisch leitfähigen Strukturen ein elektrisches Wechselfeld ausgebildet werden kann. Im einfachsten Fall können die elektrisch leitfähigen Strukturen durch ein Paar von Drähten gebildet werden. Die elektrisch leitfähigen Strukturen können jedoch auch flächige Leiter sein. Es können zwei Leiter als Paar angewendet werden oder es können mehrere Paare von Leitern verwendet werden, so dass die ersten Leiter der Paare der einen Polarität gemeinsam als die erste elektrisch leitfähige Struktur wirken und die zweiten Leiter der Paare der anderen Polarität gemeinsam als die zweite elektrisch leitfähige Struktur wirken. Auch kann das Material des Schlauches selbst bzw. einer Schicht der Schlauchwand zumindest in Teilbereichen elektrisch leitfähig ausgebildet sein, um hierdurch eine oder mehrere elektrisch leitfähige Strukturen zu bilden.

Um die elektrisch leitfähigen Strukturen herum können eine oder mehrere Schichten aus Gewebe und bzw. oder Elastomer oder dergleichen vorgesehen sein, um die elektrisch leitfähigen Strukturen und auch sonstigen Schlauchschichten vor Umwelteinflüssen zu schützen und dem Schlauch als Ganzes die gewünschten Eigenschaften z.B. hinsichtlich Druckbeständigkeit, Biegsamkeit, Aussehen, Oberflächengestaltung und dergleichen zu geben.

Die elektrisch leitfähigen Strukturen können bei der Herstellung des Schlauches in, auf oder an dem Schlauch bzw. zwischen seinen Schichten eingebracht oder auch nachträglich außen auf der äußersten Schicht des Schlauches aufgebracht werden. Somit können auch vorhandene Schläuche nachträglich mit einer erfindungsgemäßen Anordnung zur dielektrischen Erwärmung nachgerüstet werden.

Gemäß einem Aspekt der vorliegenden Erfindung kann die Wellenlänge bzw. Frequenz der elektrischen Wechselspannung zwischen der ersten und zweiten elektrisch leitfähigen Struktur während des Betriebes variiert werden.

Diesem Merkmal liegt die Erkenntnis zugrunde, dass sich auf elektrisch leitfähigen Strukturen stehende elektrische Wellen ausbilden, wenn ihre Länge groß ist gegenüber der Wellenlänge der elektromagnetischen Schwingung (Länge > 5 * λ/4). In diesem Fall hängt die Amplitude des elektrischen Wechselfeldes sinusförmig von der Längenkoordinate entlang der elektrisch leitfähigen Struktur ab. In den Schwingungsknoten verschwindet die Feldstärke, so dass an diesen Knotenstellen keine dielektrische Erwärmung erfolgt. Dies lässt sich verhindern, wenn die Frequenz der eingespeisten HF-Energie moduliert wird, so dass sich die Knotenstellen verschieben.

In anderen Worten ist der Verlauf dieser Welle bei konstanter Frequenz gleichbleibend, d.h. die Amplitude der elektrischen Wechselspannung und damit die Stärke der dielektrischen Erwärmung über die Länge der elektrisch leitfähigen Strukturen ist ortsabhängig und für jede Stelle des Schlauches gleichbleibend. Somit wird das Fluid bei konstanter Frequenz des elektrischen Wechselfeldes unterschiedlich stark erwärmt. Sollte die Frequenz hinsichtlich der Länge der elektrisch leitfähigen Strukturen sogar so gewählt sein, dass sich Schwindungsknoten ausbilden können, so wird an diesen Stellen des Schlauches sogar gar keine dielektrische Erwärmung erreicht.

Dies kann dadurch vermieden werden, dass die Frequenz des elektrischen Wechselfeldes während des Betriebes der dielektrischen Erwärmung variiert wird, d.h. sich die Knoten und Peaks der Welle über die Länge der elektrisch leitfähigen Strukturen zu bestimmten Zeitpunkten oder fortlaufend verschieben, d.h. nicht immer an derselben Stelle des Schlauches auftreten. Hierdurch wird die Leistungsdichte über die Länge der elektrisch leitfähigen Strukturen verbessert.

Gemäß einem weiteren Aspekt der vorliegenden Erfindung ist die Wellenlänge der elektrischen Wechselspannung zwischen der ersten und zweiten elektrisch leitfähigen Struktur größer als die Länge der ersten und zweiten elektrisch leitfähigen Struktur in axialer Richtung.

Diesem Merkmal liegt die Erkenntnis zugrunde, dass sich bei einem elektrischen Wechselfeld eine Welle über die Länge der elektrisch leitfähigen Strukturen ausbildet, bei der je nach Wellenlänge bzw. Frequenz der elektrischen Wechselspannung Schwingungsknoten über die Länge der elektrisch leitfähigen Strukturen entstehen können. An diesen Schwingungsknoten wird kein bzw. ein nur geringes elektrisches Wechselfeld zwischen den elektrisch leitfähigen Strukturen ausgebildet und das Fluid entsprechend auch nicht bzw. kaum dielektrisch erwärmt. Ferner können durch die Wahl dieser Wellenlänge bzw. Frequenz Resonanzeffekte vermieden werden, die ebenfalls die Leistungsdichte über die Länge der elektrisch leitfähigen Strukturen verschlechtern können. Dies gilt für im Betrieb variierende Frequenzen ebenso wie für im Betrieb konstanter Frequenzen der elektrischen Wechselspannung.

Bevorzugt ist es dabei, die Wellenlänge der elektrischen Wechselspannung zwischen der ersten und zweiten elektrisch leitfähigen Struktur deutlich größer als die Länge der ersten und zweiten elektrisch leitfähigen Struktur in axialer Richtung zu wählen, um hierdurch die zuvor beschriebenen Effekte sicher vermeiden zu können.

Besonders bevorzugt ist es dabei, die Wellenlänge der elektrischen Wechselspannung zwischen der ersten und zweiten elektrisch leitfähigen Struktur so zu wählen, dass die Länge der ersten und zweiten elektrisch leitfähigen Struktur in axialer Richtung kleiner ist als ein Viertel der Wellenlänge der elektrischen Wechselspannung.

Gemäß einem Aspekt der vorliegenden Erfindung ist das Material der ersten und bzw. oder zweiten elektrisch leitfähigen Struktur möglichst niederohmig.

Dies bedeutet, dass das Material einen möglichst geringen elektrischen Widerstand aufweist, d.h. elektrisch möglichst gut leitfähig ist. Dies dient dazu, die elektrischen Verluste in den elektrisch leitfähigen Strukturen zu minimieren, damit möglichst viel elektrische Leistung in das elektrische Wechselfeld eingebracht wird. Ebenso wird hierdurch eine möglichst gleichmäßige Ausbildung des elektrischen Wechselfeldes über die Länge der elektrisch leitfähigen Strukturen begünstigt. Ferner lässt sich eine ungewollte Erwärmung des Schlauchmaterials durch die Stromwärmeverluste in den elektrisch leitfähigen Strukturen verringern.

Schließlich ändert sich auf diese Weise der elektrische Widerstand der elektrisch leitfähigen Strukturen in Abhängigkeit der Schlauchlänge nur geringfügig, so dass die Speisung des elektrischen Wechselfeldes weitestgehend unabhängig und unbeachtlich der Schlauchlänge erfolgen kann. Somit können erfindungsgemäße Schläuche verschiedener Länge - innerhalb eines gewissen Toleranzbereichs - durch ein und dieselbe Frequenz und Amplitude der Wechselspannungsquelle gespeist werden, wodurch die Herstellung und Lagerung erfindungsgemäßer Schläuche vereinfacht und vergünstigt wird.

Gemäß einem weiteren Aspekt der vorliegenden Erfindung sind die erste und zweite elektrisch leitfähige Struktur über die gesamte Länge der Schlauchwand ausgebildet.

Vorteilhaft ist hierbei, dass das Fluid innerhalb des Schlauches über die gesamte Schlauchlänge direkt erwärmt werden kann, d.h. die Erwärmung des Fluids erfolgt über die gesamte Schlauchlänge dielektrisch und damit auch ohne die Notwendigkeit einer Vermischung des Fluids durch Strömung, so dass auch ein stehendes Fluid über die gesamte Schlauchlänge, d.h. vollständig, erwärmt werden kann.

Ferner ist hierbei der Aufbau des erfindungsgemäßen Schlauches in axialer Richtung gleichbleibend. Somit kann der Schlauch fortlaufend hergestellt und je nach Anwendung durch Zuschnitt der Länge dimensioniert werden. Hierdurch kann der erfindungsgemäße Schlauch kostengünstig hergestellt und gelagert werden.

Gemäß einem Aspekt der vorliegenden Erfindung sind die erste und zweite elektrisch leitfähige Struktur auf dem Umfang des Querschnitts des Schlauches gegeneinander isoliert ausgebildet.

Dies bedeutet, dass die elektrisch leitfähigen Strukturen im Wesentlichen in axialer Richtung auf dem Umfang des Schlauches, d.h. in axialer Richtung der Schlauchwand, verlaufen. Dabei können die elektrisch leitfähigen Strukturen in, auf oder an der gleichen Schicht des Schlauches bzw. der Schlauchwand ausgebildet sein oder auch in, auf oder an unterschiedlichen Schichten. Somit können die elektrisch leitfähigen Strukturen den gleichen Abstand oder unterschiedliche Abstände zur Innenwand des Schlauches bzw. Mittelachse des Schlauches oder der Schlauchwand haben. Auch kann je nach Geometrie des Schlauches (zylindrisch, elliptisch, eckig etc.) der Abstand einer elektrischen leitfähigen Struktur zur Innenwand des Schlauches über den Umfang ebenso variieren wie über den axialen Verlauf des Schlauches.

Da sich das elektrische Wechselfeld zwischen den elektrisch leitfähigen Strukturen in Abhängigkeit der Stoffe und deren dielektrischen Verhalten ausbildet, die sich zwischen den Äquipotentialflächen befinden (Schlauchwandschichten, Fluid etc.), kann über die Geometrie und Materialien des Schlauches bzw. der Schlauchwand und ihrer Schichten die Ausbildung des elektrischen Wechselfeldes und damit die dielektrische Erwärmung des Fluids beeinflusst werden. Auch können die elektrisch leitfähigen Strukturen jeweils durch einen oder mehrere Leiter gebildet werden, um auch hierdurch die Ausbildung des elektrischen Wechselfeldes zu beeinflussen.

So kann eine einfache Umsetzung der erfindungsgemäßen Anordnung durch ein Paar Drähte erfolgen, die in derselben Schicht oder zwischen denselben benachbarten Schichten der Schlauchwand eingebettet sind. Zwischen diesen beiden linienförmigen Äquipotentialflächen wird sich durch das Fluid hindurch ein elektrisches Wechselfeld ausbilden, mittels dessen die dielektrische Erwärmung erfolgen kann. Die Drähte können in axialer Richtung geradlinig oder gewunden (Doppelhelix) verlaufen. Dabei ist eine solche Anordnung für zahlreiche Geometrien von Schläuchen möglich sowie einfach und günstig herzustellen.

Gemäß einem weiteren Aspekt der vorliegenden Erfindung ist bzw. sind die erste und bzw. oder zweite elektrisch leitfähige Struktur auf dem Umfang des Querschnitts des Schlauches flächig ausgebildet.

Hierdurch kann jeweils eine größere Äquipotentialfläche erreicht werden als bei Drähten, d.h. linienförmigen Leitern. Über die Fläche der jeweiligen elektrisch leitfähigen Struktur bilden sich die elektrischen Feldlinien somit gleichmäßiger aus, sodass auch das Fluid gleichmäßiger von ihnen durchdrungen und dielektrisch erwärmt werden kann. Ferner wird der Anteil der elektrischen Feldlinien, die durch die Schichten des Schlauches bzw. außerhalb des Schlauches durch dessen Umgebung verlaufen verringert, so dass die Umgebung weniger durch elektrische Wellen gestört und mehr elektrische Leistung in das zu erwärmende Fluid eingebracht wird.

Dabei können die elektrisch leitfähigen Strukturen über die gleiche Breite des Radius auf dem Umfang des Querschnitts des Schlauches ausgebildet sein oder auch unterschiedliche Radien, d.h. unterschiedliche Öffnungswinkel aufweisen. Auch kann eine elektrisch leitfähige Struktur als linienförmige Äquipotentialfläche wie beispielsweise als Draht ausgebildet sein und die andere Äquipotentialfläche flächig. Dabei können sich die Äquipotentialflächen hinsichtlich des Mittelpunkts des Querschnitts des Schlauches vollständig oder zumindest teilweise direkt gegenüber liegen oder auch gar nicht. Somit kann auch bei zumindest teilweise flächigen Äquipotentialflächen eine Beeinflussung der Ausbildung des elektrischen Wechselfeldes über die Ausgestaltung und Anordnung der elektrisch leitfähigen Strukturen erfolgen.

Gemäß einem Aspekt der vorliegenden Erfindung ist die Schlauchwand zylindrisch ausgebildet und die erste und zweite elektrisch leitfähige Struktur sind auf dem Umfang des Querschnitts der Schlauchwand halbschalenförmig ausgebildet.

Auf diese Weise wird eine möglichst gleichmäßige Durchdringung des Fluids durch das elektrische Wechselfeld und damit auch eine optimale dielektrische Erwärmung des Fluids erreicht, da die Äquipotentialflächen möglichst großflächig ausgebildet und auf einer zylindrischen Oberfläche angeordnet sind, die eine gleichmäßige Verteilung der elektrischen Feldlinien auf den Äquipotentialflächen bewirkt. Auch wird der Anteil der elektrischen Feldlinien, die durch die Schichten des Schlauches bzw. außerhalb des Schlauches durch dessen Umgebung verlaufen, minimiert.

Gemäß einem weiteren Aspekt der vorliegenden Erfindung sind die erste und zweite elektrisch leitfähige Struktur auf dem Umfang des Querschnitts der Schlauchwand jeweils in Form einer Helix ausgebildet, die gemeinsam auf dem Umfang des Querschnitts der Schlauchwand eine Doppelhelix ausbilden.

Unter einer Helix wird dabei eine Wendel oder Windung verstanden. Der Begriff der Doppelhelix bezeichnet zwei umeinanderlaufende einfache Helices, die auch als zweigängige Schraube bezeichnet werden können.

Eine derartige Anordnung ist vorteilhaft, da sich die Ausbildung des elektrischen Wechselfeldes mit dem Verlauf des Schlauches in axialer Richtung fortlaufend verändert und so jeder Abschnitt des Schlauches in axialer Richtung von einem elektrischen Wechselfeld in radial anderer Ausrichtung durchdrungen wird. Das elektrische Wechselfeld wird sozusagen in axialer Richtung des Schlauches durch die Doppelhelix tordiert. Werden dabei die elektrischen Wechselfelder der verschiedenen Abschnitte des Schlauches in axialer Richtung ungleichmäßig ausgebildet, z.B. durch die Verwendung von linienförmigen bzw. kleinflächigen Äquipotentialflächen, so können sich diese Ungleichmäßigkeiten über die Länge des Schlauches in axialer Richtung ausgleichen und so ein strömendes Fluid gleichmäßig dielektrisch erwärmt werden.

Gemäß einem Aspekt der vorliegenden Erfindung sind die erste und zweite elektrisch leitfähige Struktur von einem elektrisch leitfähigen Schirm umgeben.

Sind elektrisch leitfähige Strukturen unterschiedlicher Polarität auf dem Umfang des Schlauches vorgesehen, so kann sich ein Teil der elektrischen Feldlinien auch außerhalb des Schlauches ausbilden und somit auch Geräte außerhalb des Schlauches durchdringen und dadurch stören (EMV-Probleme). Dies kann vermieden werden, indem ein elektrisch leitfähiger Schirm um diese elektrisch leitfähigen Strukturen herum vorgesehen wird. Dabei umschließt der elektrisch leitfähige Schirm die elektrisch leitfähigen Strukturen möglichst vollständig.

Gemäß einem weiteren Aspekt der vorliegenden Erfindung ist die erste elektrisch leitfähige Struktur auf dem Umfang des Querschnitts der Schlauchwand und durch die Schlauchwand gegenüber der zweiten elektrisch leitfähigen Struktur isoliert ausgebildet. Die zweite elektrisch leitfähige Struktur ist im Wesentlichen auf der Mittelachse der Schlauchwand in axialer Richtung und zumindest teilweise vom Fluid umströmt und gegenüber dem Fluid isoliert ausgebildet.

Durch diese Ausführung der erfindungsgemäßen Anordnung einer dielektrischen Erwärmung wird ein koaxialer Verlauf der elektrisch leitfähigen Strukturen erreicht. Dabei kann die erste äußere elektrisch leitfähige Struktur durch eine vollständige Ummantelung der Schlauchwand z.B. durch ein elektrisch leitfähiges Geflecht oder Gewebe vorgesehen werden. Auch kann die erste äußere elektrisch leitfähige Struktur durch eine linienförmige bzw. kleinflächige Äquipotentialfläche vorgesehen werden, die vorzugsweise schraubenförmig als Helix angeordnet sein kann, um hierdurch über den axialen Verlauf des Schlauches Ungleichmäßigkeiten in der Ausbildung des elektrischen Wechselfeldes auszugleichen. Auch können mehrere Leiter verwendet werden, die gemeinsam die erste äußere elektrisch leitfähige Struktur bilden.

Die zweite innere elektrisch leitfähige Struktur kann im Inneren des Schlauches, d.h. innerhalb der Schlauchwand im Fluid vorgesehen werden, wobei die zweite innere elektrisch leitfähige Struktur gegenüber dem Fluid elektrisch isoliert sein muss, um ein Abfließen der Elektronen von der zweiten inneren elektrisch leitfähigen Struktur über das Fluid zu vermeiden. In einem solchen Fall würde sich gegenüber der ersten äußeren elektrisch leitfähigen Struktur kein elektrisches Wechselfeld ausbilden können. Dabei kann auch die zweite innere elektrisch leitfähige Struktur durch mehrere z.B. linienförmige Äquipotentialfläche ausgebildet werden, durch deren Anwahl, Geometrie und Anordnung in Kombination mit der ersten äußeren elektrisch leitfähigen Struktur die Ausbildung des elektrischen Wechselfeldes beeinflusst werden kann.

Vorteilhaft ist bei dieser koaxialen Ausgestaltung der elektrisch leitfähigen Strukturen, dass das elektrische Wechselfeld im Wesentlichen ausschließlich zwischen diesen Äquipotentialflächen verläuft und somit kaum elektrische Feldlinien nach Außen, d.h. aus dem Schlauch heraus, treten können. Hierdurch könnten elektrische Geräte in der Umgebung des erfindungsgemäßen Schlauches gestört oder beeinflusst werden (EMV-Probleme). Wird die erste äußere elektrisch leitfähige Struktur durch eine vollständige Ummantelung der Schlauchwand ausgeführt, kann sogar die Ausbildung von elektrischen Feldlinien über die erste äußere elektrisch leitfähige Struktur hinaus vollständig vermieden werden.

Gemäß einem Aspekt der vorliegenden Erfindung wird die zweite elektrisch leitfähige Struktur durch Abstandsmittel im Wesentlichen auf der Mittelachse der Schlauchwand in axialer Richtung positioniert.

Hierbei wird als zweite innere elektrisch leitfähige Struktur vorzugsweise eine linienförmige bzw. kleinflächige Äquipotentialfläche verwendet, die mittels der Abstandsmittel im Wesentlichen auf der Mittelachse des Schlauches in axialer Richtung positioniert und auch dort gehalten werden kann. Die Abstandmittel verlaufen im Wesentlichen über die gleiche Länge wie die zweite innere elektrisch leitfähige Struktur. Die Abstandmittel können dabei derart ausgebildet sein, dass sie außen an der Isolation der zweiten inneren elektrisch leitfähigen Struktur angreifen und diese Isolation zusammen mit der zweiten inneren elektrisch leitfähigen Struktur an der Innenseite der Schlauchwand abstützen. Dabei ist es bevorzugt, dass die Abstandsmittel radial in allen Richtungen im Wesentlichen den gleichen Abstand aufweisen bzw. bewirken. Hierdurch wird zumindest in der Nähe der zweiten inneren elektrisch leitfähigen Struktur ein gleichmäßiger Verlauf der elektrischen Feldlinien erreicht. Wird die erste äußere elektrisch leitfähige Struktur durch eine vollständige Ummantelung der Schlauchwand vorgesehen, kann ein in alle radialen Richtungen gleichmäßiger Verlauf des elektrischen Wechselfeldes erreicht werden, der eine optimale Durchdringung des Fluids und damit auch dielektrische Erwärmung bewirken kann.

Die vorliegende Erfindung betrifft ferner eine Steuerung, insbesondere eine Steuerung eines Kraftfahrzeugs mit Verbrennungsmotor, zur Ansteuerung einer HF-Wechselspannungsquelle, die vorgesehen ist, eine erste und zweite elektrisch leitfähige Struktur eines erfindungsgemäßen Schlauches mit einer hochfrequenten Wechselspannung zu speisen.

Dabei umfasst die Ansteuerung der HF-Wechselspannungsquelle durch die Steuerung zumindest das Ein- und Ausschalten der HF-Wechselspannungsquelle, deren Frequenz und Amplitude in diesem Fall vorgegeben bzw. voreingestellt sein kann. Ferner kann die Steuerung auch dazu vorgesehen sein, die Frequenz und bzw. oder die Amplitude der elektrischen Wechselspannung vorzugeben bzw. einzustellen und auch während des Betriebes zu ändern.

Ebenso kann die Steuerung ausgebildet sein, die Leistung, die durch die HF-Wechselspannungsquelle in die elektrisch leitfähigen Strukturen eingespeist werden soll, zu regeln. Hierzu kann die momentan eingespeiste Leistung bzw. angelegte Spannung durch die Steuerung direkt oder geeignete Sensoren, die ihre Messung an die Steuerung weitergeben, erfasst und durch die Steuerung mit einem Soll-Wert der Leistung bzw. Spannung verglichen werden. Es kann dabei auch die Begrenzung der einzuspeisenden Leistung bzw. anzulegenden Spannung durch die Steuerung erfolgen.

Desweiteren kann die Steuerung auch eine Vorgabe bzw. Eingabe erhalten, wann bzw. dass die HF-Wechselspannungsquelle ein- bzw. auszuschalten ist. Hierzu kann die Steuerung beispielsweise einen Temperatursensor aufweisen oder von einem separaten Temperatursensor eine Information erhalten und so die Temperatur z.B. in der Umgebung des erfindungsgemäßen Schlauches oder an einem anderen Ort erfassen, um z.B. durch Vergleich mit einem vorgegebenen Wert wie ca. minus 10°C oder höher für Harnstofflösung zu erkennen, dass der erfindungsgemäße Schlauchs durch die HF-Wechselspannungsquelle mit einem elektrischen Wechselfeld zu speisen ist, um ein Gefrieren des Fluids, z.B. der Harnstofflösung, im erfindungsgemäßen Schlauchs zu verhindern.

Ausführungsbeispiele und weitere Vorteile der vorliegenden Erfindung werden nachfolgend mit Bezug zu den folgenden Figuren erläutert:
- Fig. 1a bis 6b: zeigen Prinzipskizzen verschiedener Ausführungsbeispiele der vorliegenden Erfindung mit einer Schlauchwand mit zylindrischem Fig. 7 Querschnittsprofil und auf der Schlauchwand vorgesehenen elektrisch leitfähigen Strukturen; zeigt eine dreidimensionale Darstellung des Ausführungsbeispiels der Fig. 3a und 3b;
- Fig. 8a bis 11b: zeigen Prinzipskizzen verschiedener Ausführungsbeispiele der vorliegenden Erfindung mit einer Schlauchwand mit rechteckigem Querschnittsprofil und auf der Schlauchwand vorgesehenen elektrisch leitfähigen Strukturen;
- Fig. 12a bis 13b: zeigen Prinzipskizzen verschiedener Ausführungsbeispiele der vorliegenden Erfindung mit einer Schlauchwand mit zylindrischem Querschnittsprofil und koaxial vorgesehenen elektrisch leitfähigen Strukturen; und
- Fig. 14a bis 15b: zeigen Prinzipskizzen verschiedener Ausführungsbeispiele der vorliegenden Erfindung mit einer Schlauchwand mit rechteckigem Querschnittsprofil und koaxial vorgesehenen elektrisch leitfähigen Strukturen.

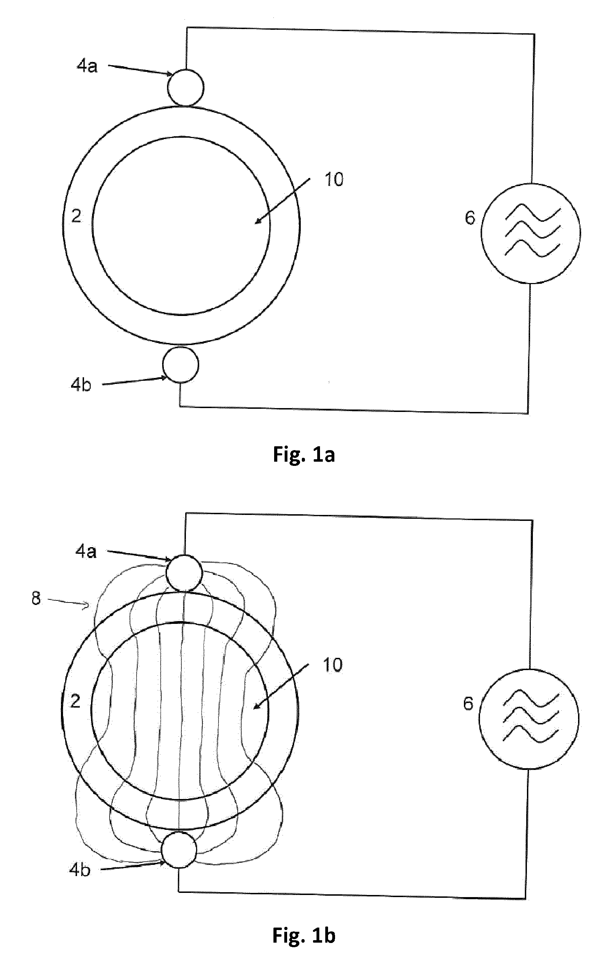

Die Fig. 1a bis 15b zeigen verschiedene Ausführungsbeispiele der vorliegenden Erfindung. Dabei weist der erfindungsgemäße Schlauch wenigstens eine Schlauchwand 2 auf, die in radialer Richtung ein Fluid 10 vollständig umschließt. Es ist jedoch ebenso möglich, Abzweigungen oder dergleichen in der Schlauchwand 2 vorzusehen, um das Fluid 10 aus dem erfindungsgemäßen Schlauch abzuführen oder ihm zuzuleiten bzw. das Fluid 10 zu verzweigen. Die Schlauchwand 2 ist vorzugsweise aus einem elastomeren Material, welches elektrisch isoliert und eine niedrige Dielektrizitätszahl εᵣ aufweist, beispielsweise εᵣ ≈ 2. Weitere Materialeigenschaften der Schlauchwand 2 können in Abstimmung mit dem Fluid 10, d.h. dessen chemischen oder sonstigen Eigenschaften gewählt werden. Ferner kann die Schlauchwand 2 von weiteren Schichten umgeben sein, um die Eigenschaften des erfindungsgemäßen Schlauches hinsichtlich Dehnbarkeit, Biegsamkeit etc. zu beeinflussen sowie die Schichten des Schlauches und insbesondere in den Schlauch eingebrachte elektrisch leitfähige Strukturen 4a, 4b gegenüber der Umwelt zu schützen. Das Profil bzw. der Querschnitt der Schlauchwand 2 kann verschieden ausgestaltet sein und sich auch über die axiale Ausdehnung der Schlauchwand 2 verändern.

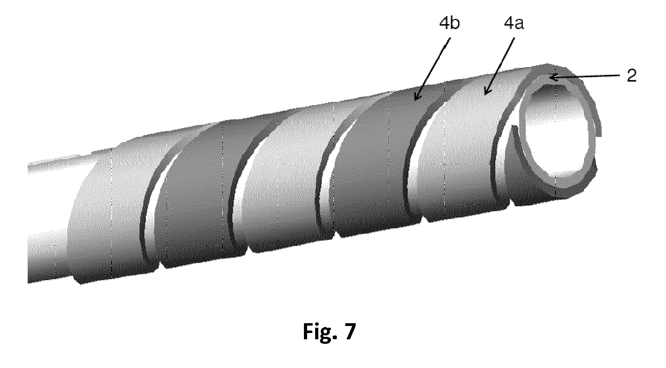

Zur Erzeugung des elektrischen Wechselfeldes sind wenigstens zwei Äquipotentialflächen als elektrisch leitfähige Strukturen 4a, 4b vorgesehen, die mittels einer Wechselspannungsquelle 6 hochfrequent gespeist werden können. Die Äquipotentialflächen der elektrisch leitfähigen Strukturen 4a, 4b sind in den Fig. 1a bis 6b und 8a bis 15b im Schnitt durch den Schlauch bzw. die Schlauchwand und damit auch durch die elektrisch leitfähigen Strukturen 4a, 4b dargestellt. Es können alle Ausführungsbeispiele der elektrisch leitfähigen Strukturen 4a, 4b in axialer Richtung gerade oder auch gedreht verlaufend ausgeführt sein, wie in Fig. 7 beispielhaft für eine Doppelhelix dargestellt.

Die Wechselspannungsquelle 6 ist nicht Bestandteil des erfindungsgemäßen Schlauches selbst, kann jedoch mit ihm zu einer Baugruppe verbunden sein. Der erfindungsgemäße Schlauch weist hierzu Anschlüsse auf (nicht dargestellt), über die die elektrisch leitfähigen Strukturen 4a, 4b mit den Polen der Wechselspannungsquelle 6 verbunden werden können.

Erfindungsgemäß bilden sich elektrische Feldlinien 8 in allen nachfolgend beschriebenen Ausführungsbeispielen zwischen den Äquipotentialflächen der elektrisch leitfähigen Strukturen 4a, 4b aus und durchdringen zumindest teilweise das Fluid 10 innerhalb der Schlauchwand 2 im Wesentlichen in radialer Richtung. Dabei stehen die elektrischen Feldlinien 8 sowohl auf den Äquipotentialflächen der elektrisch leitfähigen Strukturen 4a, 4b als auch auf der Oberfläche des Fluids 10 in radialer Richtung senkrecht. Die die elektrischen Feldlinien 8 durchdringen die nicht-elektrisch leitfähigen Bereiche des Schlauches wie die Schlauchwand 2, weiterer optionaler Schichten des Schlauches oder auch die Umgebung außerhalb des Schlauches so, dass sie auf den elektrisch leitfähigen Strukturen 4a, 4b und dem Fluid 10 wieder senkrecht ausgerichtet sind.

Fig. 1a bis 6b zeigen Prinzipskizzen verschiedener Ausführungsbeispiele der vorliegenden Erfindung mit einer Schlauchwand 2 mit zylindrischem Querschnittsprofil und auf der Schlauchwand 2 vorgesehenen elektrisch leitfähigen Strukturen 4a, 4b.

Fig. 1a und 1b zeigen zwei linienförmige elektrisch leitfähige Strukturen 4a, 4b, die einander direkt gegenüberliegend auf unterschiedlichen Seiten einer zylindrischen Schlauchwand 2 angeordnet und mit den entsprechenden entgegengesetzten Polen der Wechselspannungsquelle 6 verbunden sind. Fig. 1b zeigt die Ausbreitung der entsprechenden elektrischen Feldlinien 8 zwischen den elektrisch leitfähigen Strukturen 4a, 4b. Aufgrund der linienförmigen Ausbildung der elektrisch leitfähigen Strukturen 4a, 4b treten die elektrischen Feldlinien in radialer Richtung der elektrisch leitfähigen Strukturen 4a, 4b aus diesen aus bzw. in diese hinein. Das Fluid 10 wird dabei zwar vollständig von den elektrischen Feldlinien 10 durchströmt, doch bilden sich auch elektrische Feldlinien 8 zwischen den beiden Äquipotentialflächen 4a, 4b aus, die das Fluid 10 nicht durchströmen sondern durch die Schlauchwand 2 oder weitere Schichten des Schlauches bzw. die Umgebung führen. Somit nutzt diese Anordnung die elektrische Energie des Wechselfeldes nicht vollständig und gibt auch ein elektrisches Feld 8 in die Umgebung des Schlauches ab, was zu Problemen der elektromagnetischen Verträglichkeit (EMV) führen kann. Letzterer Nachteil kann dadurch gemindert bzw. vermieden werden, dass die elektrisch leitfähigen Strukturen 4a, 4b nach Außen geschirmt werden.

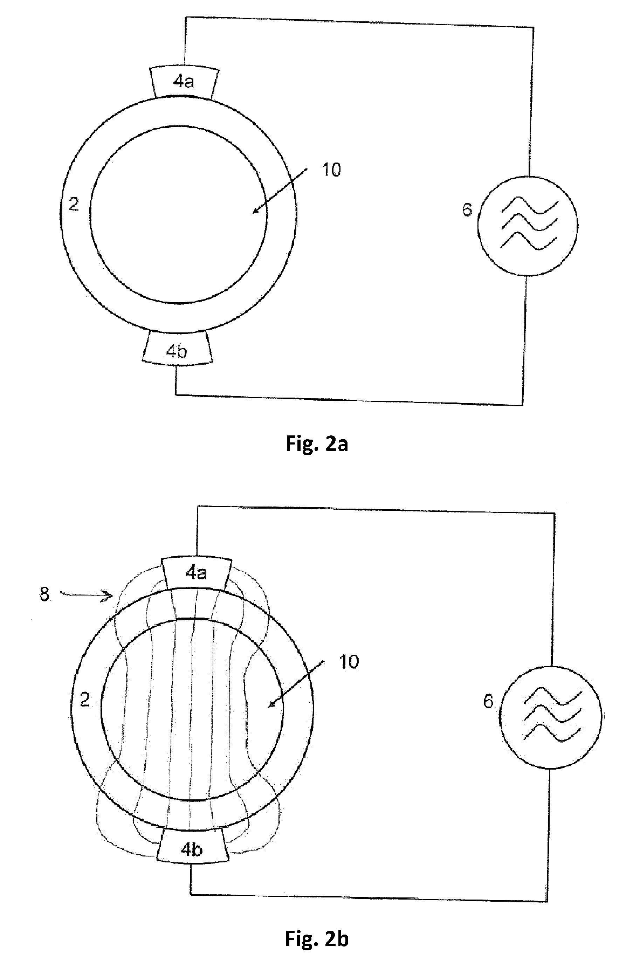

Fig. 2a und 2b zeigen zwei halbschalenförmige elektrisch leitfähige Strukturen 4a, 4b geringer Breite auf einer zylindrischen Schlauchwand 2. Diese Äquipotentialflächen bilden ihre elektrischen Feldlinien 8 zu einem größeren Anteil in rein radialer Richtung aus als die linienförmigen elektrisch leitfähigen Strukturen 4a, 4b der Fig. 1a und 1b, so dass sich auch weniger elektrische Feldlinien 8 außerhalb des Fluids 10 ausbilden. Jedoch können weiterhin einige wenige elektrische Feldlinien 8 nicht in das Fluid 10 ein und sogar aus dem Schlauch nach Außen austreten.

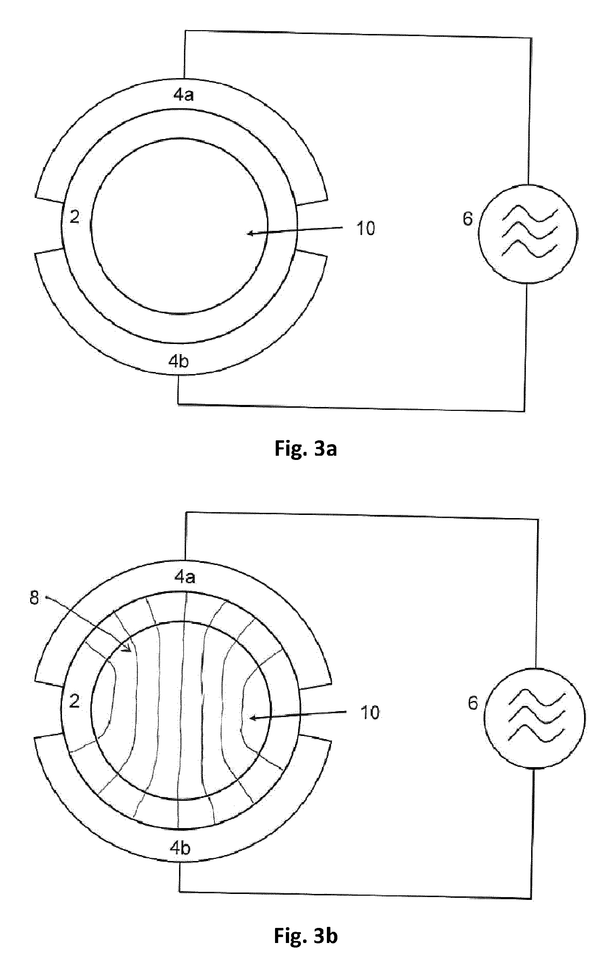

Fig. 3a und 3b zeigen zwei halbschalenförmige elektrisch leitfähige Strukturen 4a, 4b, die nahezu über den gesamten Umfang der zylindrischen Schlauchwand 2 ausgebildet und gegeneinander in Umfangsrichtung beabstandet bzw. isoliert sind. Bei dieser Anordnung wird nahezu das gesamte elektrische Feld 8 innerhalb der elektrisch leitfähigen Strukturen 4a, 4b ausgebildet, so dass nahezu die gesamte elektrische Energie zur dielektrischen Erwärmung des Fluids 10 genutzt wird und fast überhaupt keine elektrischen Feldlinien 8 außerhalb der elektrisch leitfähigen Strukturen 4a, 4b ausgebildet werden. Daher kann in diesem Ausführungsbeispiel auf eine Schirmung des Schlauches nach Außen verzichtet werden.

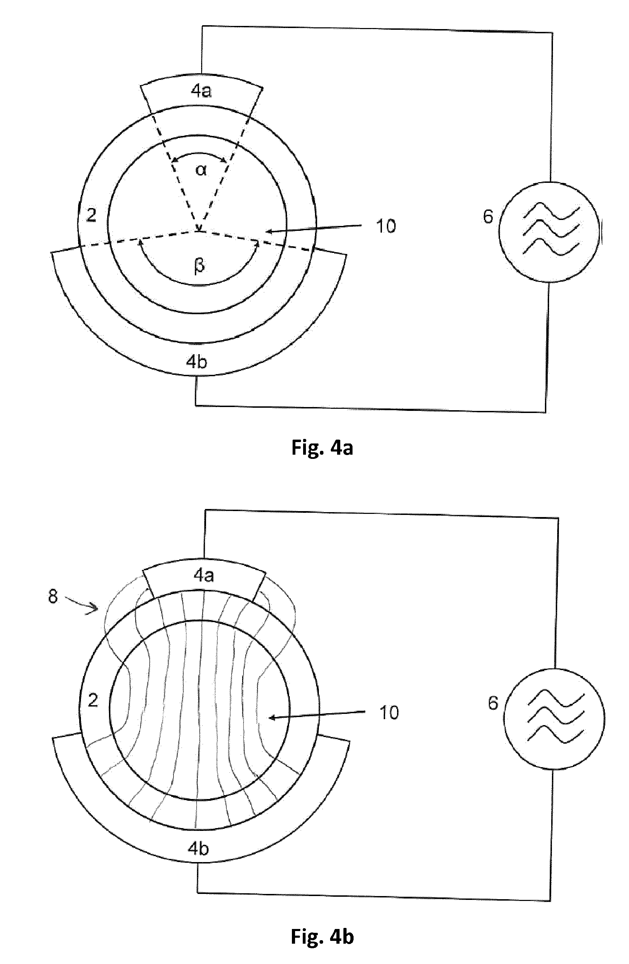

Fig. 4a und 4b zeigen zwei halbschalenförmige elektrisch leitfähige Strukturen 4a, 4b unterschiedlicher Breite auf dem Umfang der Schlauchwand 2. Die unterschiedliche Breite wird über den jeweiligen Öffnungswinkel α, β beschrieben, der den Umfangwinkel der Schlauchwand 2 definiert. Dabei ist der Öffnungswinkel α der elektrisch leitfähigen Struktur 4a in dem Ausführungsbeispiel der Fig. 4a und 4b kleiner als der Öffnungswinkel β der elektrisch leitfähigen Struktur 4b.

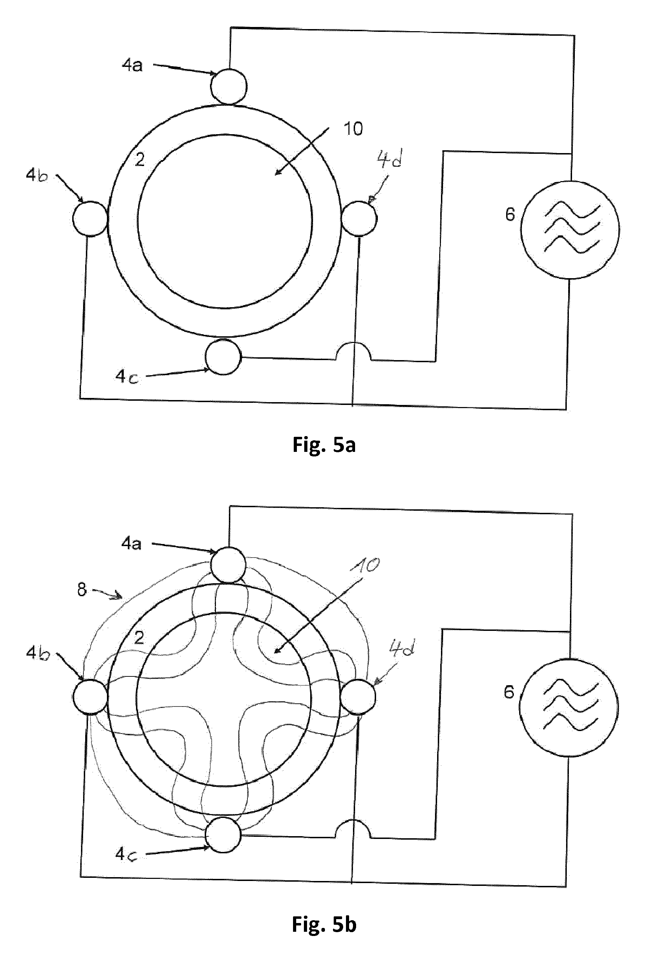

Fig. 5a und 5b zeigen zwei elektrisch leitfähige Strukturen 4a, 4b, 4c, 4d, die jeweils durch zwei linienförmige Leiter 4a, 4b, 4c, 4d gebildet werden. Die elektrisch leitfähigen Strukturen 4a, 4c bilden den einen Pol und die elektrisch leitfähigen Strukturen 4b, 4d den anderen Pol des Kondensators.

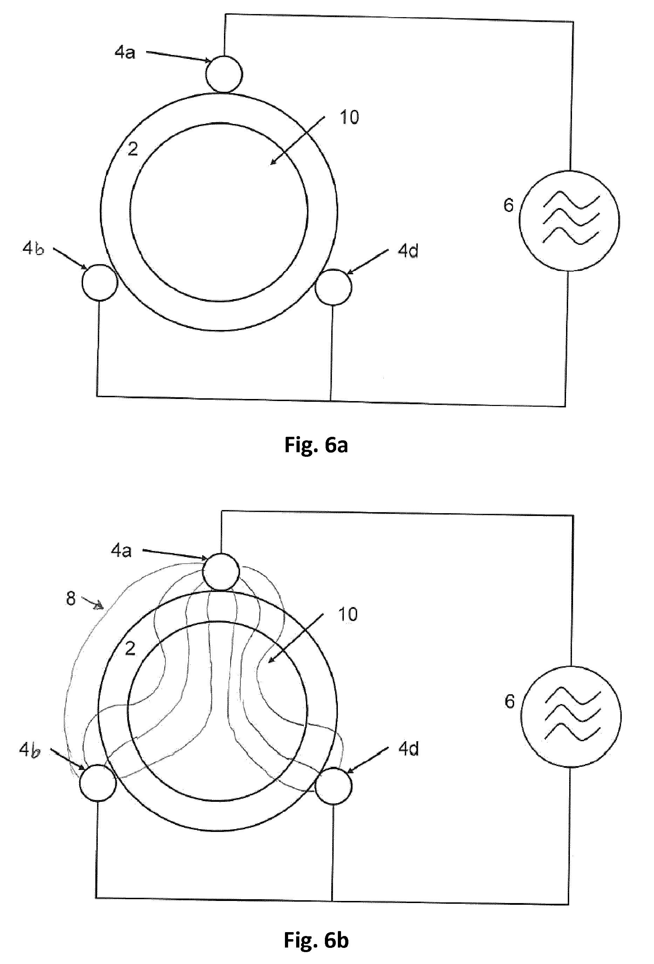

Fig. 6a und 6b zeigen drei elektrisch leitfähige Strukturen 4a, 4b, 4d, von denen die elektrisch leitfähige Struktur 4a den einen Pol und die elektrisch leitfähigen Strukturen 4b, 4d den anderen Pol des Kondensators bilden.

Fig. 7 zeigt eine dreidimensionale Darstellung des Ausführungsbeispiels der Fig. 3a und 3b. Gezeigt ist die Schlauchwand 2, um die herum die beiden halbschalenförmigen elektrisch leitfähigen Strukturen 4a, 4b in Form einer Doppelhelix vorgesehen sind.

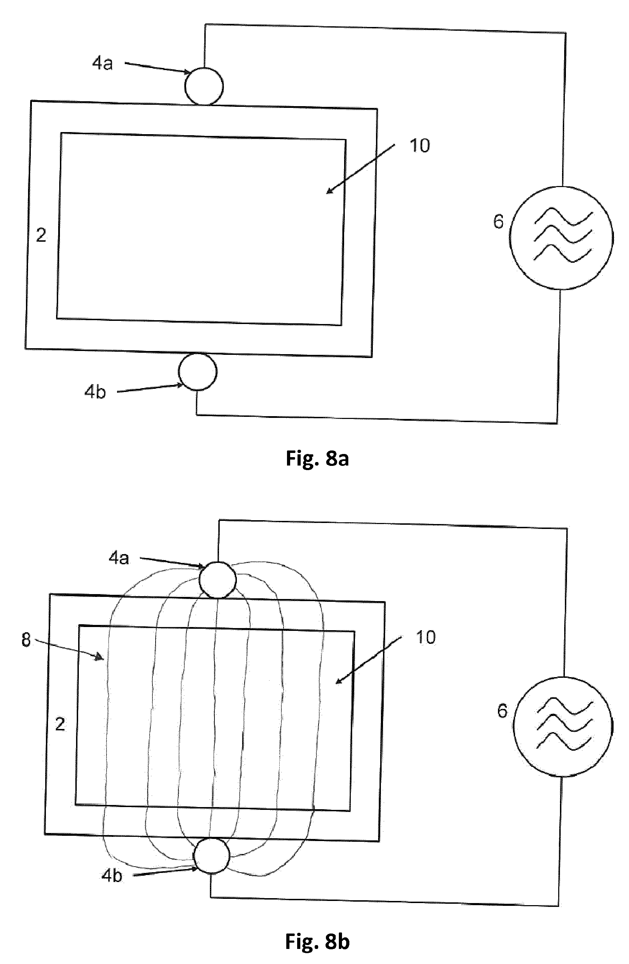

Fig. 8a bis 11b zeigen Prinzipskizzen verschiedener Ausführungsbeispiele der vorliegenden Erfindung mit einer Schlauchwand 2 mit rechteckigem Querschnittsprofil und auf der Schlauchwand 2 vorgesehenen elektrisch leitfähigen Strukturen 4a, 4b.

Fig. 8a und 8b zeigen zwei linienförmige elektrisch leitfähige Strukturen 4a, 4b, die einander direkt gegenüberliegend auf unterschiedlichen Seiten einer rechteckigen Schlauchwand 2 angeordnet und mit den entsprechenden entgegengesetzten Polen der Wechselspannungsquelle 6 verbunden sind. Die Ausbildung der elektrischen Feldlinien 8 entspricht im Wesentlichen der der Fig. 1a und 1b. Anstelle eines rechteckigen Schlauchwandprofils sind auch viereckige oder andere Schlauchwandprofile mit einer geradezahligen Anzahl von Ecken möglich. Schlauchwandprofile mit einer ungeradezahligen Anzahl von Ecken können ebenso verwendet werden, vorzugsweise mit einer ungeradezahligen Anzahl von elektrisch leitfähigen Strukturen 4a, 4b, 4d, wie in den Fig. 6a, 6b gezeigt.

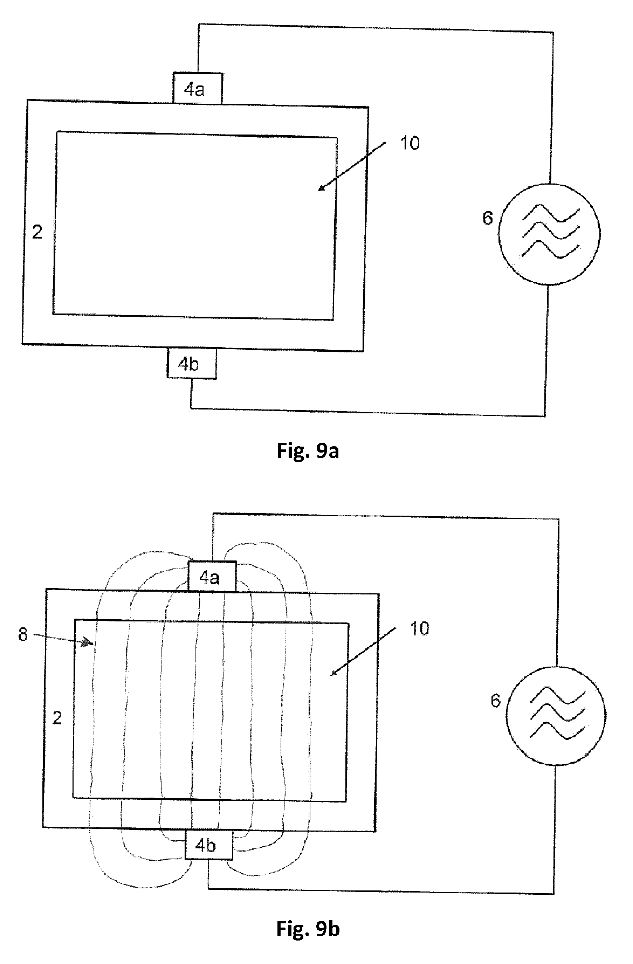

Fig. 9a und 9b zeigen zwei flächige elektrisch leitfähige Strukturen 4a, 4b geringer Breite auf einer rechteckigen Schlauchwand 2. Die Ausbildung der elektrischen Feldlinien 8 entspricht im Wesentlichen der der Fig. 2a und 2b.

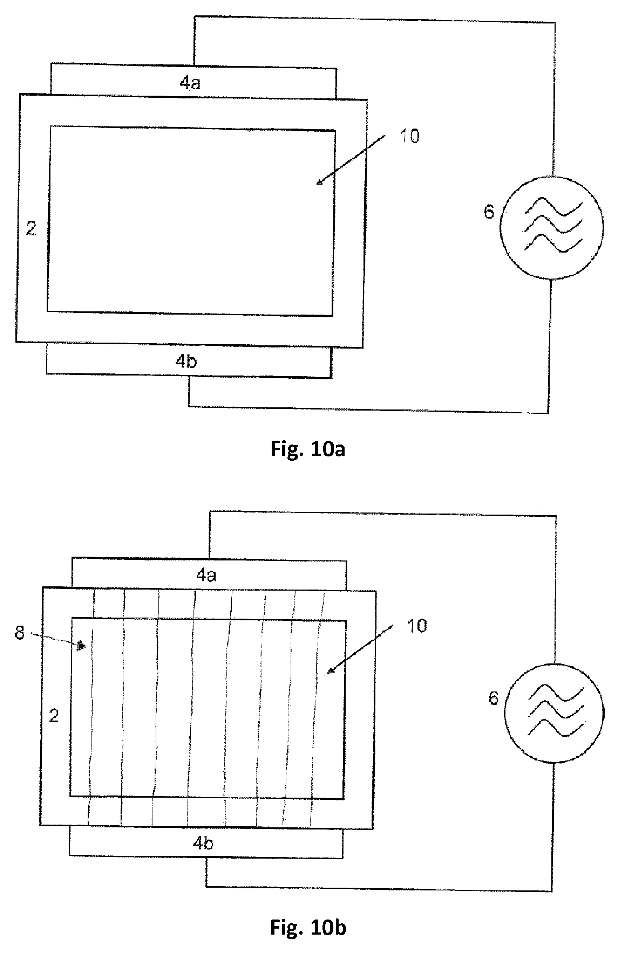

Fig. 10a und 10b zeigen zwei flächige elektrisch leitfähige Strukturen 4a, 4b, die nahezu über die gesamte Breite der rechteckigen Schlauchwand 2 ausgebildet sind. Die Ausbildung der elektrischen Feldlinien 8 entspricht im Wesentlichen der der Fig. 3a und 3b.

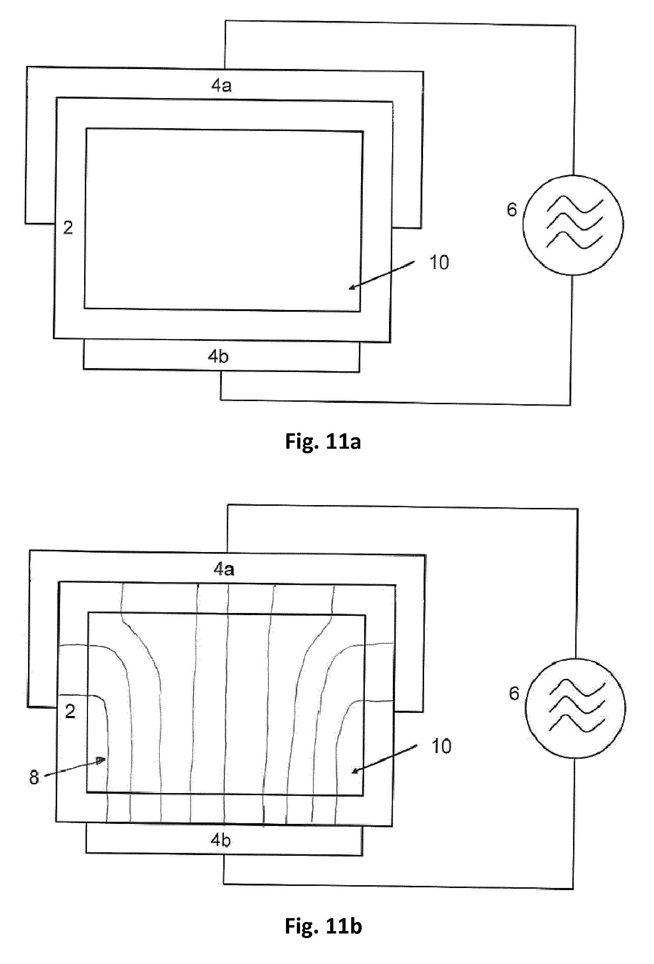

Fig. 11a und 11b zeigen zwei flächige elektrisch leitfähige Strukturen 4a, 4b unterschiedlicher Breite. Die elektrisch leitfähige Struktur 4a ist dabei zumindest teilweise um drei Seiten der rechteckigen Schlauchwand 2 ausgebildet; die elektrisch leitfähige Struktur 4b ist nahezu über die gesamte Breite der vierten Seite der rechteckigen Schlauchwand 2 ausgebildet. Die Ausbildung der elektrischen Feldlinien 8 entspricht im Wesentlichen der der Fig. 4a und 4b.

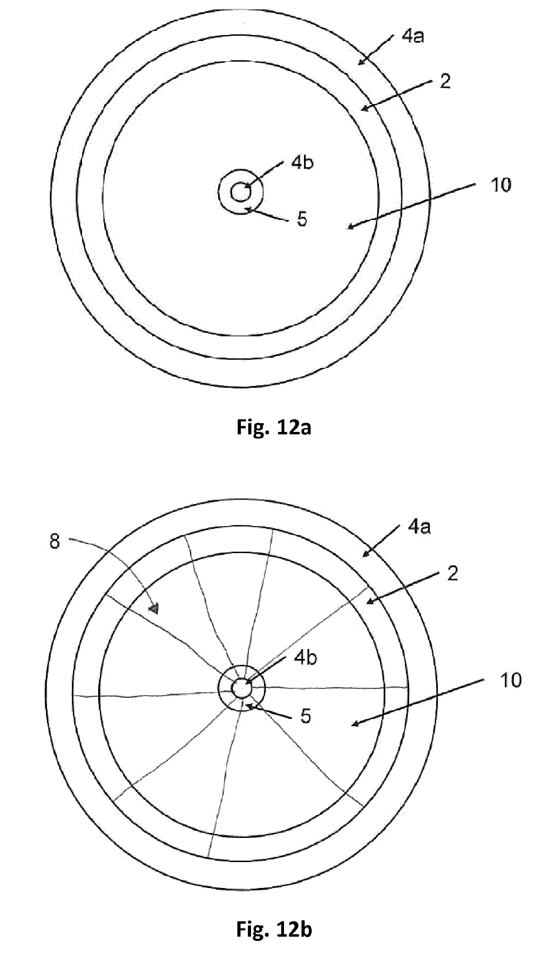

Fig. 12a bis 13b zeigen Prinzipskizzen verschiedener Ausführungsbeispiele der vorliegenden Erfindung mit einer Schlauchwand 2 mit zylindrischem Querschnittsprofil und koaxial vorgesehenen elektrisch leitfähigen Strukturen 4a, 4b.

Fig. 12a und 12b zeigen den Aufbau eines koaxialen Leiters, d.h. die eine elektrisch leitfähige Struktur 4a ist auf dem Umfang der Schlauchwand 2 angeordnet und die andere elektrisch leitfähige Struktur 4b ist ungefähr mittig innerhalb der Schlauchwand 2, d.h. innerhalb des Fluids 10, angeordnet. Dabei ist die innere elektrisch leitfähige Struktur 4b mit einer Isolation 5 umgeben, um einen Abfluss der elektrischen Energie über das Fluid 10 zu verhindern. Wie in Fig. 4b gezeigt, bildet sich das elektrische Feld 8 in diesem Ausführungsbeispiel rein radial aus.

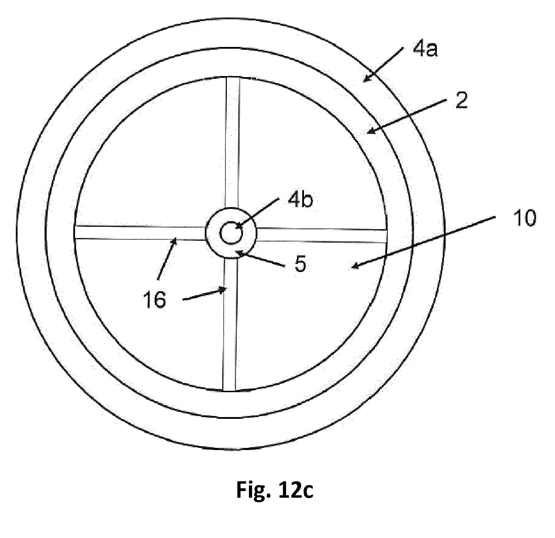

Fig. 12c zeigt den koaxialen Aufbau der Fig. 12a und 12b mit Abstandsmitteln 16, welche zwischen der Innenseite der Schlauchwand 2 und der Isolation der inneren elektrisch leitfähigen Struktur 4b vorgesehen sind. Die Abstandsmittel 16 sind so bemessen und angeordnet, dass die innere elektrisch leitfähige Struktur 4b über ihre gesamte axiale Länge auf einen konstanten Abstand zu der äußeren elektrisch leitfähigen Struktur 4a gehalten wird. Hierdurch bildet sich auch das elektrische Wechselfeld 8 radial gleichmäßig aus, wodurch das Fluid 10 über den gesamten Querschnitt der Schlauchwand 2 gleichmäßig dielektrisch erwärmt wird. Die Abstandmittel 16 sind dabei aus nicht elektrisch leitfähigem Material vorzusehen, damit sie das elektrische Feld 8 nicht beeinflussen.

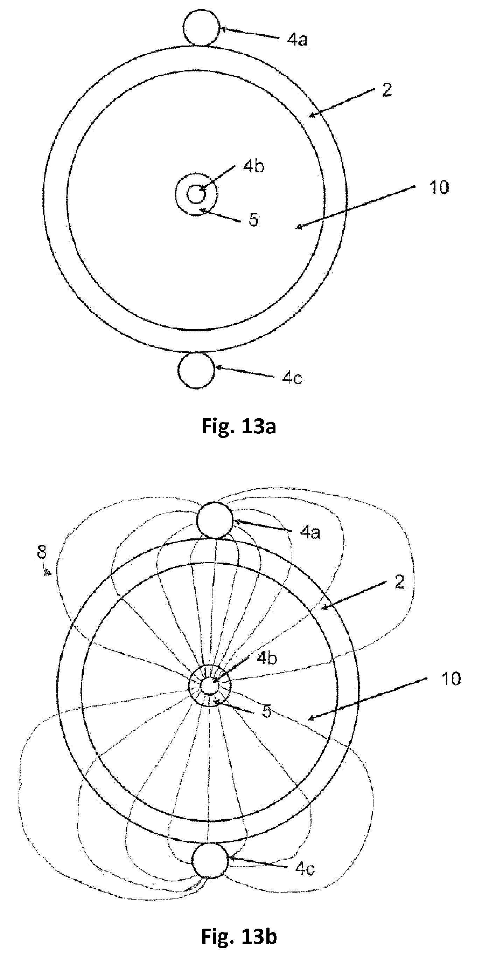

Fig. 13a und 13b zeigen drei elektrisch leitfähige Strukturen 4a, 4b, 4c, von denen die elektrisch leitfähigen Strukturen 4a, 4c auf der zylindrischen Schlauchwand 2 vorgesehen sind und den einen Pol des Kondensators bilden und die elektrisch leitfähige Struktur 4b koaxial innerhalb der Schlauchwand 2 vorgesehen ist und den anderen Pol des Kondensators bildet.

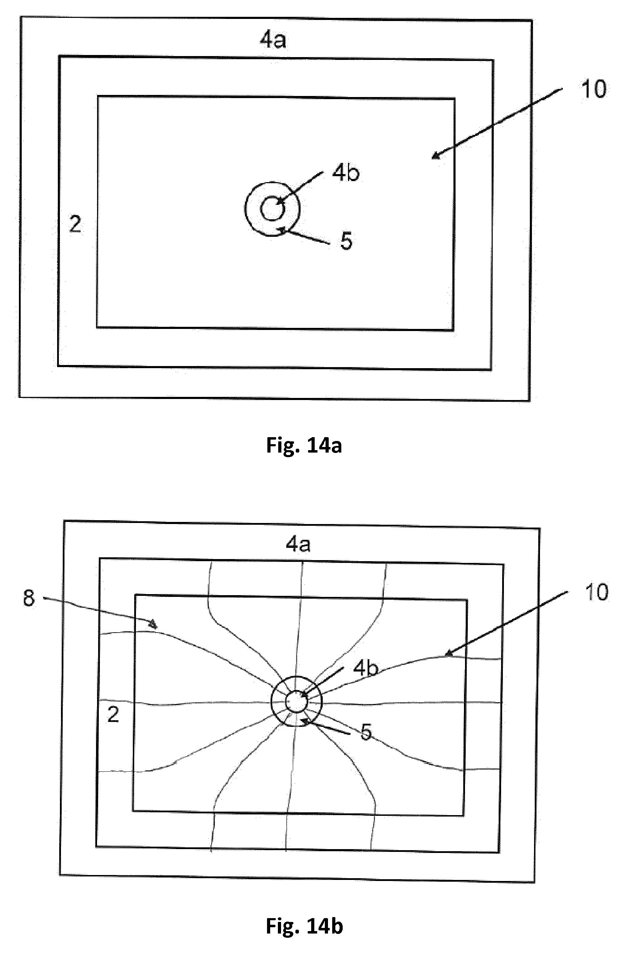

Fig. 14a bis 15b zeigen Prinzipskizzen verschiedener Ausführungsbeispiele der vorliegenden Erfindung mit einer Schlauchwand 2 mit rechteckigem Querschnittsprofil und koaxial vorgesehenen elektrisch leitfähigen Strukturen 4a, 4b.

Fig. 14a und 14b zeigen einen koaxialen Aufbau, der dem Ausführungsbeispiel der Fig. 12a und 12b entspricht, jedoch ein rechteckiges Schlauchwandprofil 2 aufweist.

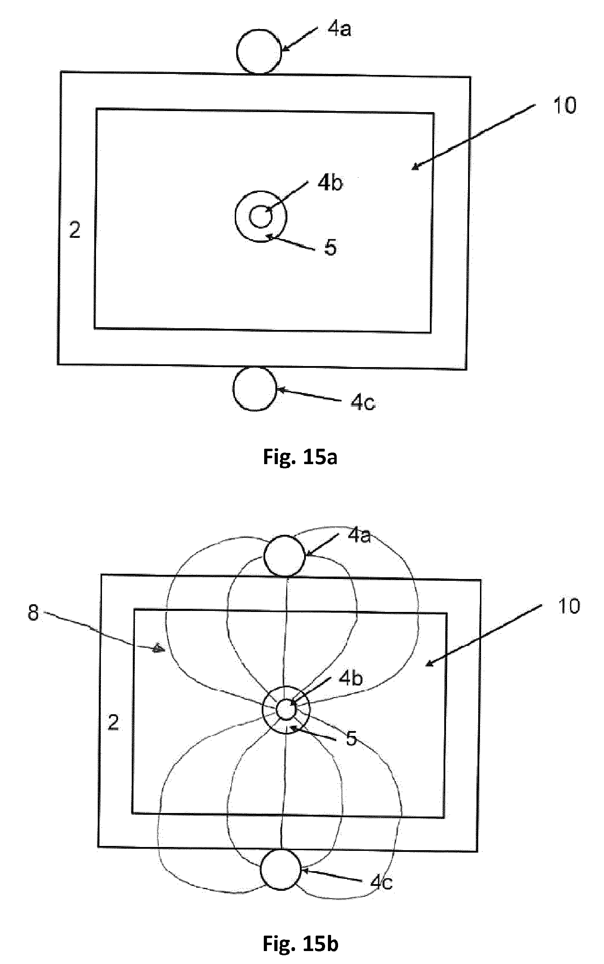

Fig. 15a und 15b zeigen einen koaxialen Aufbau, der dem Ausführungsbeispiel der Fig. 13a und 13b entspricht, jedoch ein rechteckiges Schlauchwandprofil 2 aufweist.

## Patentansprüche

1. Schlauch, mit
einer Schlauchwand (2), und
einer ersten und einer zweiten elektrisch leitfähigen Struktur (4a, 4b), zwischen denen eine elektrische Wechselspannung angelegt werden kann,
**dadurch gekennzeichnet, dass**
die erste und zweite elektrisch leitfähige Struktur (4a, 4b) im Wesentlichen in axialer Richtung des Schlauches verlaufend derart vorgesehen sind, dass sich zwischen der ersten und zweiten elektrisch leitfähigen Struktur (4a, 4b) ein im Wesentlichen radial zur Schlauchwand (2) verlaufendes elektrisches Wechselfeld ausbilden kann, welches ein innerhalb der Schlauchwand (2) befindliches Fluid (10) zumindest teilweise durchdringt.

2. Schlauch nach Anspruch 1,
wobei die Wellenlänge bzw. Frequenz der elektrischen Wechselspannung zwischen der ersten und zweiten elektrisch leitfähigen Struktur (4a, 4b) während des Betriebes variiert werden kann.

3. Schlauch nach Anspruch 1 oder 2,
wobei die Wellenlänge der elektrischen Wechselspannung zwischen der ersten und zweiten elektrisch leitfähigen Struktur (4a, 4b) größer als die Länge der ersten und zweiten elektrisch leitfähigen Struktur (4a, 4b) in axialer Richtung ist.

4. Schlauch nach einem der vorherigen Ansprüche,
wobei das Material der ersten und/oder zweiten elektrisch leitfähigen Struktur (4a, 4b) möglichst niederohmig ist.

5. Schlauch nach einem der vorherigen Ansprüche,
wobei die erste und zweite elektrisch leitfähige Struktur (4a, 4b) über die gesamte Länge der Schlauchwand (2) ausgebildet sind.

6. Schlauch nach einem der vorherigen Ansprüche,
wobei die erste und zweite elektrisch leitfähige Struktur (4a, 4b) auf dem Umfang des Querschnitts des Schlauches gegeneinander isoliert ausgebildet sind.

7. Schlauch nach einem der vorherigen Ansprüche,
wobei die erste und/oder zweite elektrisch leitfähige Struktur (4a, 4b) auf dem Umfang des Querschnitts des Schlauches flächig ausgebildet ist/sind.

8. Schlauch nach einem der vorherigen Ansprüche,
wobei die Schlauchwand (2) zylindrisch ausgebildet ist, und
wobei die erste und zweite elektrisch leitfähige Struktur (4a, 4b) auf dem Umfang des Querschnitts der Schlauchwand (2) halbschalenförmig ausgebildet sind.

9. Schlauch nach einem der vorherigen Ansprüche,
wobei die erste und zweite elektrisch leitfähige Struktur (4a, 4b) auf dem Umfang des Querschnitts der Schlauchwand (2) jeweils in Form einer Helix ausgebildet sind, die gemeinsam auf dem Umfang des Querschnitts der Schlauchwand (2) eine Doppelhelix ausbilden.

10. Schlauch nach einem der vorherigen Ansprüche,
wobei die erste und zweite elektrisch leitfähige Struktur (4a, 4b) von einem elektrisch leitfähigen Schirm umgeben sind.

11. Schlauch nach einem der Ansprüche 1 bis 5,
wobei die erste elektrisch leitfähige Struktur (4a) auf dem Umfang des Querschnitts der Schlauchwand (2) und durch die Schlauchwand (2) gegenüber der zweiten elektrisch leitfähigen Struktur (4b) isoliert ausgebildet ist, und
wobei die zweite elektrisch leitfähige Struktur (4b) im Wesentlichen auf der Mittelachse der Schlauchwand (2) in axialer Richtung und zumindest teilweise vom Fluid (10) umströmt und gegenüber dem Fluid (10) isoliert ausgebildet ist.

12. Schlauch nach Anspruch 11,
wobei die zweite elektrisch leitfähige Struktur (4b) durch Abstandsmittel (16) im Wesentlichen auf der Mittelachse der Schlauchwand (2) in axialer Richtung positioniert wird.

13. Steuerung, insbesondere Steuerung eines Kraftfahrzeugs mit Verbrennungsmotor,
zur Ansteuerung einer HF-Wechselspannungsquelle (6), die vorgesehen ist, eine erste und zweite elektrisch leitfähige Struktur (4a, 4b) eines Schlauches nach einem der vorherigen Ansprüche mit einer hochfrequenten Wechselspannung zu speisen.

14. System, mit:
einem Schlauch nach einem der Ansprüche 1 bis 12, und
einer HF-Wechselspannungsquelle (6), die vorgesehen ist, die erste und zweite elektrisch leitfähige Struktur (4a, 4b) des Schlauches mit einer hochfrequenten Wechselspannung zu speisen.

15. System nach Anspruch 14,
wobei die HF-Wechselspannungsquelle (6) vorgesehen ist, die Wellenlänge bzw. Frequenz der elektrischen Wechselspannung zwischen der ersten und zweiten elektrisch leitfähigen Struktur (4a, 4b) während des Betriebes zu variieren.
